# EUROPEAN PATENT SPECIFICATION

(11) **EP 1 620 189 B1**
(45) Date of publication and mention of the grant of the patent: **13.06.2012**
(21) Application number: 04729695.9
(22) Date of filing: 27.04.2004
(51) Int. Cl.: A63F 13/10, A63F 13/12

(54) **GAME HAS LOCALLY SAVED POINTER TO STATE SAVED ELSEWHERE**
SPIEL MIT LOKAL GESPEICHERTEM POINTER ZU EXTERN GESPEICHERTEM SPIELSTAND
JEU A SAUVEGARDE LOCALE D'UN POINTEUR VERS UN ETAT SAUVEGARDE AILLEURS

(30) Priority: 29.04.2003 EP 03101177
(43) Date of publication of application: 01.02.2006
(73) Proprietor: Koninklijke Philips Electronics N.V., 5621 BA Eindhoven (NL)
(72) Inventor: BULTHUIS, Willem, NL-5656 AA Eindhoven (NL)
(74) Representative: Damen, Daniel Martijn
(86) International application number: PCT/IB2004/050526
(87) International publication number: WO 2004/096397

(56) References cited:
- US-A1- 2003 014 423
- SONY ENTERTAINMENT: "Everquest Demo"[Online] 28 February 1999 (1999-02-28), XP002287779 Retrieved from the Internet: URL:http://everquest.station.sony.com/tril ogy/download.jsp> -& "Everquest Game MMORPG URL - http://everquest.station.sony.com/about.js p DWWW- 2003-11-06" 6 November 2003 (2003-11-06), , XP002263086 page 2
- AKKERMANS T H M ET AL: "Chip in disc for optical storage" 7 July 2002 (2002-07-07), , PAGE(S) 3-5 , XP010600108 the whole document

## Description

### FIELD OF THE INVENTION

The invention relates to a method and a system to enable to store large-size state information (e.g., a game state) in order to access this state, e.g., for resuming user interaction, independent of geographic location of the user and of the device used.

### BACKGROUND ART

Software applications such as games, movies, training, etc., are typically distributed stored on physical carriers, e.g., CDs, DVDs, solid-state memory cards, and floppy disks. These carriers can be inserted into, and removed from, a play-out apparatus such as a game station or a PC. Frequently, users of such applications may wish to put on hold the playback of, or interaction with, such applications, in order to continue at a later time. Preferably, playback of the application is then automatically resumed from exactly the same state of the application where the user decided to terminate the playback. Such state information can be limited to, e.g., a timestamp or a frame number of a movie, or quite extensive as in a computer game. It is therefore desirable to be able to store the state information.

For example, U.S. patent 5,609,525 discloses an apparatus for data reception in television games. A data signal for a television game is transmitted from a base station for receipt by a local station at an end-user's. The received data signal is used to play a game. The apparatus comprises a first memory for storing a data signal of a predetermined game and a second memory for storing a predetermined game state at the time of termination of a game. In the case where the user terminates the game halfway, for example, the user can store the state of the game into the second memory at the time of termination, if necessary. In the case where the user wishes to play the same game again by newly selecting and downloading the data of the same game into the first memory at another time, the user can start the game from the scene where the game was terminated at the preceding time, if the user reads out the data of the game from the second memory.

### SUMMARY OF THE INVENTION

Often users wish to continue to interact with the software application at a different geographic location, e.g., a game resumed at a friend's home, or a training application resumed at home after having started at work, etc. It is therefore desirable to be able to store the state information on the same removable physical carrier that contains the application itself. This is possible if the physical carrier has record and re-write capabilities, such as solid-state memory cards. However, memory space can be very limited and is rather expensive on such carriers, in which case storage of substantial state information is not an economically feasible option.

Furthermore, such physical carrier is in many instances read-only and can therefore not be used to record the state information. In some implementations, the state information is therefore stored at a separate medium, such as on a magnetic hard disk embedded in the machine used to play the removable physical carrier. This has the disadvantage that the state can only be retrieved from the same machine that was last used for playback, thus limiting flexibility in location of retrieval for continued playback.

Accordingly, the invention addresses, among other things, the problem of how to store the state information of the application, so that a maximum of flexibility and user-friendliness is provided to a user desiring to resume or start interaction with the application from a specific state at another machine or at another location. The software application relates in particular, but not exclusively, to an evolutionary process such as a game, a training program, an evolution of a virtual environment community, an interactive movie, etc.

The invention therefore provides a method of enabling to start interaction with software from a specific state of the software. The method comprises enabling to locally store a pointer to remotely stored or remotely saved information of the specific state, e.g., on a network. In this manner, local memory at the end-user's apparatus, e.g., a game console, PDA or cellphone, need only store a pointer, whereas the specific state information is uploaded (before terminating interaction) to a remote repository, e.g., a server on the home network or on the Internet. Preferably, the method of the invention comprises enabling to automatically retrieve the specific state information upon retrieval of the pointer, and enabling to automatically retrieve the pointer, e.g., upon the user initiating a process to start the interaction. Preferably, the specific state information comprises information about a setting of a user interface.

The invention also relates to a data carrier system for use with a data processing system. The carrier system has a read-only portion comprising user-interactive software, and a writeable portion for storing a pointer to a specific state of the software at a time of terminating user-interaction. Preferably, the read-only portion and the writeable portion are integrated in a physical data carrier. For example, the read-only portion comprises an optical disc and the writeable portion comprises a Chip-in-Disc. Preferably, the read-only portion comprises control software for control of storing and retrieving the pointer and for storing and retrieving the specific state information as associated with the pointer. In another embodiment the carrier system comprises a first physical data carrier for accommodating the read-only portion, and a second physical data carrier for accommodating the writeable portion, the second physical carrier being physically separate from the first physical carrier. For example, the read-only portion is accommodated on an optical disc, floppy disk, or on a hard disk, etc., and the writeable portion is accommodated on a flash-memory card or in a memory stick, etc.

The invention also relates to an apparatus, e.g., a game console, for enabling user interaction with software from a specific state of the software onward. The apparatus enables to retrieve information about the specific state from a remote source under control of a pointer to the information, the pointer being locally stored, e.g., at the console or on the software carrier. The apparatus is enabled to communicate with the remote resource for saving and/or retrieving the specific state information. For example, the apparatus is network-enabled. An embodiment of the apparatus has a Chip-in-Disc functionality, i.e., an optical disc drive and components to interact with the electronic circuitry embedded in the disc. The circuitry is preferably used to store the pointer. Another embodiment of the apparatus has a removable memory for storing the pointer, in addition to having an optical disc drive, a HDD, or a slot for engaging a solid-state memory for the user-interactive software. The apparatus can have control software onboard to control saving the specific state to the remote resource and to store the pointer locally.

The invention enables, for example, the following scenario. A user has a physical data carrier, e.g., a CD-ROM, with a computer game and terminates interaction with the game that is played at a first apparatus. He/she then takes the CD-ROM to a second apparatus later on, uses the pointer to download the state information, valid at the time of terminating, to the second apparatus and resumes the game from there. In another scenario, the invention enables the game to be played on similar lines to a relay race, wherein different participants of the same team cover subsequent stretches of a track. To be more specific, a first user plays the game until a certain stage has been reached or until his/her playtime has expired, etc., and a second user resumes the game at the specific state where the first user has left off. Both first and second users have CD-ROMs with the code of the same game. The second user retrieves the pointer to the specific state, from which to resume playing, from the first user and downloads the associated state information from a server via a network. The server can be the first user's machine or a server remote to both users. The first and second users may be at different machines at different geographic locations and need not be active in contiguous time slots. In this scenario, a social and co-operative aspect is introduced in an otherwise solitary or adversarial context of a conventional computer game. In yet another scenario within the context of interaction with a virtual environment, a participant may want to delegate interaction to a teammate if certain conditions arise. For example, the teammate is more skilled than the participant at handling a particular task that has arisen during the evolution of the environment. The pointer is now being used as a token to hand-over control to the teammate, who takes over the interaction for this specific task at the specific state left by the first participant. For background on a virtual environment with multiple participants, see, e.g., U.S. patent 6,025,801 (attorney docket PHA 23,155) issued to Brad Beitel for VIDEO GAME WITH LOCAL UPDATES MITIGATES LATENCY EFFECTS IN WIDE AREA NETWORK, and U.S. patent 6,475,090 (attorney docket US 018035) issued to Greg ("Grog") Roelofs for COMPENSATING FOR NETWORK LATENCY IN A MULTI-PLAYER GAME. U.S. patent 6,025,801 relates to multiple users sharing a virtual environment through an interactive software application. State changes of a specific user are transmitted to one or more other users dependent on respective relative distances in the virtual environment between the specific user and each respective one of the other users. This conditional transmission reduces message traffic and allows a virtual environment to scale indefinitely. U.S. patent 6,475,090 relates to a method for compensating for high-latency computer clients in a multi-player electronic game played on a plurality of terminals connected by a network. A latency value is determined for computer clients operating the terminals. Then a latency compensation factor is determined from the latency value for each client computer. The playing modality of a client computer can then be adjusted based on the latency compensation factor.

In another scenario enabled by the invention, a student interacts with training software, the state of which gets saved on the network when the interaction gets suspended temporarily. The pointer to the specific state is made available, preferably automatically and beyond control of the student, to the student's teacher so as to enable the teacher to monitor the student's progress by checking the current specific state that is retrievable through the pointer.

In yet another scenario enabled by the invention, a collection of electronic content, e.g., movies or music, is organized according to play-lists. For example, the music collection is organized in background music, party music, classic symphonies, etc. A play-list is made available, e.g., to interested individuals, through a pointer. Loading the pointer into a network-enabled rendering device initiates downloading the play-list that is used as an input to a local software application. The application then controls selecting the relevant content from, e.g., a local collection, or from a collection on the network or from both. In case of a remote collection, the selected content is streamed to the rendering device via the network. In this scenario, a specific play-list puts the rendering application into a specific state of the interaction with the collection.

Currently emerging recording and storage technologies, such as Chip-in-Disc (a technology from Philips Electronics), enable the recording of some data on otherwise read-only carriers. However, the capacity of such recording is extremely limited, due to cost, size and power limitations. It is therefore not feasible to record substantial state information such as game states using this technology. The current invention enables the automatic retrieval of substantial amounts of state information by using only very limited data stored on a physical carrier, independently of the device used for playing out from this carrier. The benefits are a great user-experience, as it is possible to resume an application, such as a game or training program, at a different time, location, and device, without any need to manually, or in another manner, enter information in order to identify application, user, or state.

### BRIEF DESCRIPTION OF THE DRAWING

The invention is explained in further detail, by way of example and with reference to the accompanying drawing, wherein:

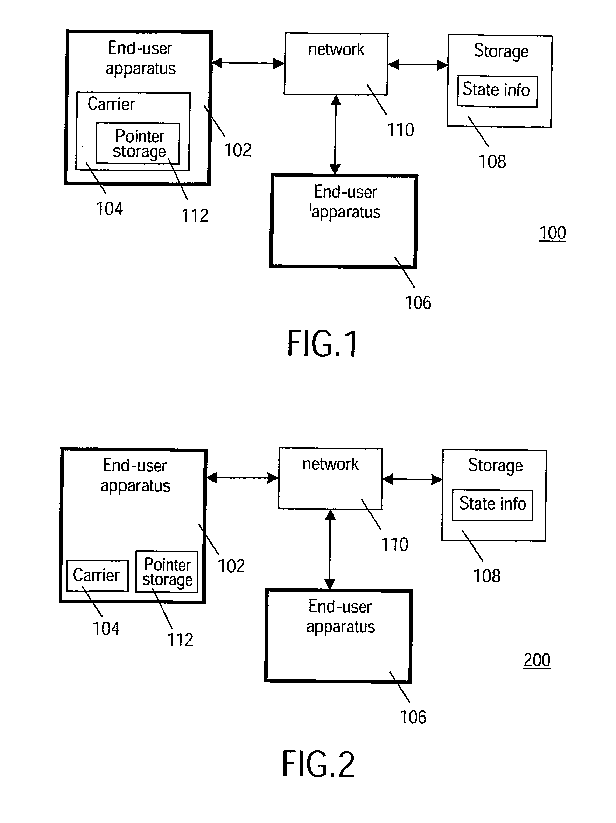

Figs. 1, 2 and 3 are block diagrams of a system of the invention.

Throughout the drawing, same reference numerals indicate similar or corresponding features.

### DETAILED EMBODIMENTS

Fig. 1 is a block diagram of a system 100 in the invention. System 100 comprises an end-user apparatus 102 with a removable physical data carrier 104 storing the code for a user-interactive software application. Apparatus 102 comprises, e.g., a PC, a game console, a cell phone, a PDA, a settop box, etc. Carrier 104 comprises, e.g., an optical disc, a floppy disk, a flash memory card or another removable memory module. Carrier 104 is preferably standardized and can be used with another end-user apparatus 106 if the latter is provided with a proper connection or receptacle for functionally connecting to carrier 104.

Apparatus 102 plays out the content from carrier 104 and is further operative to record limited amounts of data and to read limited amounts of data, preferably under control of the code of the software application at carrier 104. This recording is done, e.g., at carrier 104 itself enabled through, for example, Chip-in-Disc technology. Apparatus 104 is further network-enabled so as be able to connect to an online service 108 on a data network 110 (e.g., the Internet).

Conditions arise under which state information needs to be saved about the current state of the application being currently played out by apparatus 102. The appearance of these conditions is triggered, e.g., by the application itself, by the user or as a result of other influences, such as "time expired". Upon the appearance of such a condition, apparatus 102 makes a connection to online service 108 and communicates the complete state information of the application for online storage by service 108 (e.g., on a remote server). Apparatus 102 then receives a unique identifier, herein referred to as "pointer") from service 108, that uniquely identifies the stored state at service 108. This identifier can be fully generated by online service 108, or can partly be based on identifying information provided by apparatus 102, e.g. based on information from the application and/or user, etc. Apparatus 102 then records the pointer onto the limited storage functionality 112 of carrier 104 currently in apparatus 102.

The extensive state information is now semi-permanently stored by online service 108 for retrieval later on. The pointer needed to retrieve the state information is now stored in limited storage 112 on carrier 104.

Whenever the user wishes to resume playing the application on carrier 104, he/she inserts carrier 104 in any compatible apparatus, e.g., apparatus 106 at whatever location. Apparatus 106 is programmed to, or triggered by, the application to read the pointer recorded in carrier 104 and then proceeds to contact online service 108. Apparatus 106 submits the pointer to service 108 and requests the corresponding state information as stored, possibly after having gone through certain identification and authorization procedures. Service 108 retrieves the corresponding state information and sends this to apparatus 102. The application running on apparatus 106 uses this state information to restore the application in the same state as it was in when the state got saved and stored at server 108.

Fig. 2 is a block diagram of a system 200 of the invention of a configuration that is slightly different from the one of system 100. Pointer storage 112 is now physically separated from carrier 104 and is, for example, provided as an additional removable physical carrier, e.g., a memory stick of flash card. Alternatively, storage 112 is part of an embedded memory, such as an EEPROM or a hard disk, resident at apparatus 102.

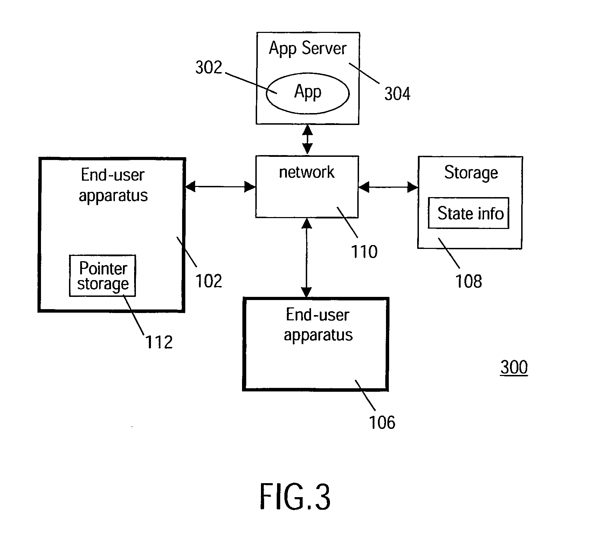

Fig. 3 is a block diagram of a system 300 of the invention. Apparatus 102 is now used to interact, via network 110 with an application 302, e.g., a virtual environment, at a server 304. See for a context example, e.g., US patent 6,025,801 (attorney docket PHA 23,155) mentioned above. The user now has the state of the application saved on storage 108 to the extent that it is relevant to his/her personal history of interaction. For example, the state to be saved relates to, e.g., the configuration of one's avatar, the process of performing a task such as building a structure in the virtual environment, etc. Such a task does not involve, or does not need to be shared by, the entire virtual community. Application server 304 is capable of saving the personal state, based on monitoring state changes brought about by this particular user and discriminating between private and public tasks. Server 304 provides a pointer to the state as saved that the user can store at apparatus 102, either internally to apparatus 112 or on a removable memory component 112. Logging on from machine 106 with the proper pointer or inserting component 112 into compatible machine 106 automatically triggers retrieving the relevant state information from storage 108 under control of the pointer in memory 112 and setting the user-interaction with application 302 into the associated state. This embodiment enables in a convenient manner the sharing or leasing of an avatar. As to the latter, a participant in a virtual community specifies to a dedicated service the kind of avatar he/she wants and gets delivered a specimen for being customized by the participant. The customized avatar or its customization parameters get saved at remote storage 108 for being retrieved in operational use. As another example, consider a software application that lets a child construct and maintain an amusement park in a virtual environment. Before leaving home he/she uploads the state of the application to a server, saves the pointer locally and takes the CD with the application, along with the pointer, to a friend. At the friend's, he/she uses the pointer to download the state information to the machine of the friend to resume the interaction with the amusement park application.

## Claims

1. A method of enabling to start user interaction with software from a specific state of the software onward,
wherein the software is available on a read-only portion of a removable data carrier that also includes a writeable portion integrated in the physical data carrier,
**characterised by** the steps of,
enabling to locally store on the writeable portion of the data carrier, an identifier identifying remotely stored information of the specific state of the software.

2. The method of claim 1, comprising enabling to save the specific state information on a network.

3. The method of claim 1, comprising enabling to automatically retrieve the specific state information upon retrieval of the identifier.

4. The method of claim 3, comprising enabling to automatically retrieve the identifier upon the user initiating a process to start the interaction.

5. The method of claim 4, wherein the initiating comprises inserting a data carrier, which accommodates the software, into a network-enabled apparatus.

6. The method of claim 1, wherein the software comprises a computer game.

7. The method of claim 1, wherein the read-only portion comprises a read-only optical disc and the writeable portion comprises a Chip-in-Disc.

8. The method of claim 1, comprising enabling a previous user to initiate the saving of the identifier and enabling the user to start the interaction from the specific state onward as specified by the identifier.

9. The method of claim 8, enabling the previous user to initiate the saving of the identifier from a first apparatus, and enabling the user to start the interaction from a second apparatus, different from the first apparatus.

10. The method of claim 1, wherein the specific state information comprises information about a setting of a user interface.

11. A data carrier system for use with a data processing system, the carrier system having a read-only portion comprising user-interactive software, a writeable portion for storing an identifier identifying remotely stored information of a specific state of the software wherein the read-only portion and the writeable portion are integrated in a physical data carrier.

12. The data carrier system of claim 11, wherein the read-only portion comprises an optical disc and wherein the writeable portion comprises a Chip-in-Disc.

13. The data carrier system of claim 11, wherein the read-only portion comprises control software for control of storing the identifier.

14. The data carrier system of claim 11, wherein the read-only portion comprises control software for control of retrieving the identifier.

15. The data carrier system of claim 11 wherein the read-only portion comprises control software for control of storing the specific state information.

16. The data carrier system of claim 11, wherein the read-only portion comprises control software for retrieving the specific state information under control of the identifier.

17. The data carrier system of claim 11, comprising a first physical carrier for accommodating the read-only portion, and comprising a second physical carrier for accommodating the writeable portion, the second physical carrier being physically separate from the first physical carrier.

18. An apparatus for enabling user interaction with software from a specific state of the software onwards, the apparatus being operative to enable to retrieve information about the specific state from a remote source under control of a locally stored identifier identifying the information, the apparatus configured to cooperate with a data carrier that accommodates the software on a read-only portion of the data carrier and which data carrier has a writeable memory portion for storing the identifier, the read-only portion and the writeable portion integrated in a physical data carrier.

19. The apparatus of claim 18, operative to communicate with the remote resource via a data network.

20. The apparatus of claim 19, having a Chip-in-Disc functionality.

## Patentansprüche

1. Verfahren, um eine Benutzerinteraktion mit Software von einem spezifischen Zustand der Software aus zu starten,
wobei die Software auf einem Nurleseteil eines Wechseldatenträgers, der ebenfalls einen in den physikalischen Datenträger integrierten, beschreibbaren Teil enthält, vorhanden ist,
**dadurch gekennzeichnet, dass** nach dem Verfahren
auf dem beschreibbaren Teil des Datenträgers ein Identifier zum Identifizieren ferngespeicherter Informationen des spezifischen Zustands der Software lokal gespeichert werden kann.

2. Verfahren nach Anspruch 1, wonach die spezifischen Zustandsinformationen auf einem Netzwerk gespeichert werden können.

3. Verfahren nach Anspruch 1, wonach die spezifischen Zustandsinformationen bei Abrufen des Identifiers automatisch abgerufen werden können.

4. Verfahren nach Anspruch 3, wonach der Identifier automatisch abgerufen werden kann, nachdem der Benutzer einen Vorgang initiiert hat, um die Interaktion zu beginnen.

5. Verfahren nach Anspruch 4, wobei der Schritt des Initiierens das Einsetzen eines Datenträgers, der die Software aufnimmt, in eine netzwerkfähige Vorrichtung umfasst.

6. Verfahren nach Anspruch 1, wobei die Software ein Computerspiel umfasst.

7. Verfahren nach Anspruch 1, wobei der Nurleseteil eine optische Nurlese-Platte umfasst und der beschreibbare Teil eine Chip-in-Disc umfasst.

8. Verfahren nach Anspruch 1, wonach es einem vorherigen Benutzer ermöglicht wird, die Speicherung des Identifiers zu initiieren und es dem Benutzer zu ermöglichen, die Interaktion von dem spezifischen Zustand aus, wie von dem Identifier spezifiziert, zu beginnen.

9. Verfahren nach Anspruch 8, wonach es dem vorherigen Benutzer ermöglicht wird, die Speicherung des Identifiers von einer ersten Vorrichtung aus zu initiieren, und es dem Benutzer ermöglicht wird, die Interaktion von einer sich von der ersten Vorrichtung unterscheidenden, zweiten Vorrichtung aus zu beginnen.

10. Verfahren nach Anspruch 1, wobei die spezifischen Zustandsinformationen Informationen über eine Einstellung einer Benutzeroberfläche umfassen.

11. Datenträgersystem zur Verwendung mit einem Datenverarbeitungssystem, wobei das Datenträgersystem einen Nurleseteil mit benutzerinteraktiver Software und einen beschreibbaren Teil zur Speicherung eines Identifiers zum Identifizieren femgespeicherter Informationen eines spezifischen Zustands der Software umfasst, wobei der Nurleseteil und der beschreibbare Teil in einen physikalischen Datenträger integriert sind.

12. Datenträgersystem nach Anspruch 11, wobei der Nurleseteil eine optische Platte umfasst und wobei der beschreibbare Teil eine Chip-in-Disc umfasst.

13. Datenträgersystem nach Anspruch 11, wobei der Nurleseteil Steuersoftware zur Steuerung der Speicherung des Identifiers umfasst.

14. Datenträgersystem nach Anspruch 11, wobei der Nurleseteil Steuersoftware zur Steuerung des Abrufens des Identifiers umfasst.

15. Datenträgersystem nach Anspruch 11, wobei der Nurleseteil Steuersoftware zur Steuerung der Speicherung der spezifischen Zustandsinformationen umfasst.

16. Datenträgersystem nach Anspruch 11, wobei der Nurleseteil Steuersoftware zum Abrufen der spezifischen Zustandsinformationen unter Steuerung des Identifiers umfasst.

17. Datenträgersystem nach Anspruch 11, mit einem ersten physikalischen Datenträger zur Aufnahme des Nurleseteils, sowie mit einem zweiten physikalischen Datenträger zur Aufnahme des beschreibbaren Teils, wobei der zweite physikalische Datenträger von dem ersten physikalischen Datenträger physikalisch getrennt ist.

18. Vorrichtung, um eine Benutzerinteraktion mit Software von einem spezifischen Zustand der Software aus zu ermöglichen, wobei die Vorrichtung so arbeitet, dass sie Informationen über den spezifischen Zustand von einer Remote-Source aus unter Steuerung eines die Informationen identifizierenden, lokal gespeicherten Identifiers abrufen kann, wobei die Vorrichtung so konfiguriert ist, dass sie mit einem Datenträger zusammenwirkt, der die Software auf einem Nurleseteil des Datenträgers aufnimmt und der einen beschreibbaren Speicherteil zur Speicherung des Identifiers, des Nurleseteils und des beschreibbaren Teils, die in einen physikalischen Datenträger integriert sind, aufweist.

19. Vorrichtung nach Anspruch 18, die so arbeitet, dass sie mit der Remote-Ressource über ein Datennetzwerk kommuniziert.

20. Vorrichtung nach Anspruch 19, mit einer Chip-in-Disc-Funktionalität.

## Revendications

1. Procédé destiné à permettre de démarrer une interaction d'utilisateur avec un logiciel à partir d'un état spécifique du logiciel,
dans lequel le logiciel est disponible dans une partie en lecture seule d'un support de données amovible qui comprend également une partie accessible en écriture intégrée au support de données physique,
**caractérisé en ce qu'**il comprend les étapes qui consistent à :
permettre d'enregistrer localement, sur la partie accessible en écriture du support de données, un identifiant qui identifie des informations stockées à distance concernant l'état spécifique du logiciel.

2. Procédé selon la revendication 1, comprenant l'étape qui consiste à permettre de sauvegarder les informations concernant l'état spécifique sur un réseau.

3. Procédé selon la revendication 1, comprenant l'étape qui consiste à permettre de récupérer automatiquement les informations concernant l'état spécifique après avoir récupéré l'identifiant.

4. Procédé selon la revendication 3, comprenant l'étape qui consiste à permettre de récupérer automatiquement l'identifiant lorsque l'utilisateur lance un procédé destiné à démarrer l'interaction.

5. Procédé selon la revendication 4, dans lequel le lancement consiste à insérer un support de données, sur lequel se trouve le logiciel, dans un dispositif pouvant fonctionner sur un réseau.

6. Procédé selon la revendication 1, dans lequel le logiciel comprend un jeu électronique.

7. Procédé selon la revendication 1, dans lequel la partie en lecture seule comprend un disque optique en lecture seule et la partie accessible en écriture comprend une puce sur disque.

8. Procédé selon la revendication 1, comprenant l'étape qui consiste à permettre à un utilisateur précédent de démarrer l'interaction à partir de l'état spécifique tel qu'indiqué par l'identifiant.

9. Procédé selon la revendication 8, permettant à l'utilisateur précédent de lancer la sauvegarde de l'identifiant à partir d'un premier dispositif, et permettant à l'utilisateur de démarrer l'interaction à partir d'un second dispositif différent du premier dispositif.

10. Procédé selon la revendication 1, dans lequel les informations concernant l'état spécifique comprennent des informations concernant le paramétrage d'une interface utilisateur.

11. Système de support de données destiné à être utilisé avec un système informatique, le système de support ayant une partie en lecture seule comprenant un logiciel à interaction avec l'utilisateur, une partie accessible en écriture destinée à stocker un identifiant qui identifie des informations stockées à distance concernant un état spécifique du logiciel, dans lequel la partie en lecture seule et la partie accessible en écriture sont intégrées à un support de données physique.

12. Système de support de données selon la revendication 11, dans lequel la partie en lecture seule comprend un disque optique et dans lequel la partie accessible en écriture comprend une puce sur disque.

13. Système de support de données selon la revendication 11, dans lequel la partie en lecture seule comprend un logiciel de commande destiné à commander le stockage de l'identifiant.

14. Système de support de données selon la revendication 11, dans lequel la partie en lecture seule comprend un logiciel de commande destiné à commander la récupération de l'identifiant.

15. Système de support de données selon la revendication 11, dans lequel la partie en lecture seule comprend un logiciel de commande destiné à commander le stockage des informations concernant l'état spécifique.

16. Système de support de données selon la revendication 11, dans lequel la partie en lecture seule comprend un logiciel de commande destiné à récupérer les informations concernant l'état spécifique sous le contrôle de l'identifiant.

17. Système de support de données selon la revendication 11, comprenant un premier support physique destiné à recevoir la partie en lecture seule, et comprenant un second support physique destiné à recevoir la partie accessible en écriture, le second support physique étant physiquement séparé du premier support physique.

18. Dispositif destiné à permettre une interaction d'utilisateur avec un logiciel à partir d'un état spécifique du logiciel, le dispositif étant utilisable pour permettre de récupérer des informations concernant l'état spécifique à partir d'une source distante sous le contrôle d'un identifiant stocké localement qui identifie les informations, le dispositif étant conçu pour coopérer avec un support de données qui contient le logiciel dans une partie en lecture seule du support de données et ledit support de données comportant une partie mémoire accessible en écriture et destinée à stocker l'identifiant, la partie en lecture seule et la partie accessible en écriture étant intégrées à un support de données physique.

19. Dispositif selon la revendication 18, utilisable pour communiquer avec la ressource distante par l'intermédiaire d'un réseau de données.

20. Dispositif selon la revendication 19, ayant des fonctionnalités de puce sur disque.
